# EUROPÄISCHE PATENTSCHRIFT

(11) **EP 1 093 477 B1**
(45) Veröffentlichungstag und Bekanntmachung des Hinweises auf die Patenterteilung: **11.08.2004**
(21) Anmeldenummer: 99939777.1
(22) Anmeldetag: 29.05.1999
(51) Int. Cl.: C08F 12/04

(54) **VERFAHREN ZUR HERSTELLUNG VON POLYMERISATEN AUS VINYLAROMATISCHEN VERBINDUNGEN DURCH DISPERSIONSPOLYMERISATION UNTER ZUSATZ VON SCHMIERMITTELN**
METHOD FOR PRODUCING POLYMERS FROM VINYLAROMATIC COMPOUNDS BY DISPERSION POLYMERISATION WITH THE ADDITION OF LUBRICATING AGENTS
PROCEDE DE PREPARATION DE POLYMERISATS A BASE DE COMPOSES VINYLAROMATIQUES PAR POLYMERISATION EN DISPERSION, SOUS ADJONCTION DE LUBRIFIANTS

(30) Priorität: 09.06.1998 DE 19825713
(43) Veröffentlichungstag der Anmeldung: 25.04.2001
(73) Patentinhaber: BASF AKTIENGESELLSCHAFT, 67056 Ludwigshafen (DE)
(72) Erfinder: WÜNSCH, Josef, D-67105 Schifferstadt (DE); ANSELMANN, Wolfgang, D-67483 Edesheim (DE)
(86) Internationale Anmeldenummer: PCT/EP1999/003750
(87) Internationale Veröffentlichungsnummer: WO 1999/064483

(56) Entgegenhaltungen:
- DE-A- 19 507 777
- DE-A- 19 542 356
- Plastic Additives, R. Gächter et al., Carl Hanser Verlag, München, 4. Aufl., 1993, Seiten 423, 456-466, 476-479
- Additives for Plastics Handbook, Elsevier Science Ltd., Oxford, 1996, Seiten 241-250

## Beschreibung

Die Erfindung betrifft ein Verfahren zur Herstellung von Polymerisaten aus vinylaromatischen Verbindungen in Dispersion in Gegenwart eines Dispergierhilfsmittels und eines Katalysators, erhältlich aus A) einem Übergangsmetallkomplex der II. bis VIII. Nebengruppe, B) einem kationenbildenden Agens und C) ggf. einer Aluminiumverbindung.

Die hierbei erhältlichen Polymerisate können zur Herstellung von Fasern, Folien und Formkörpern verwendet werden.

Die Polymerisation von Styrol in Gegenwart von Metallocenkatalysatorsystemen führt zu Polymerisaten mit hoher Stereoregularität und ist z. B. ausführlich in EP-A 0 210 615 beschrieben. Syndiotaktisches Polystyrol besitzt aufgrund seiner Kristallinität einen sehr hohen Schmelzpunkt von ca 270°C, hohe Steifigkeit und Zugfestigkeit, Dimensionsstabilität, eine niedrige Dielektrizitätskonstante und eine hohe Chemikalienbeständigkeit. Das mechanische Eigenschaftsprofil wird selbst bei Temperaturen über der Glastemperatur beibehalten.

Bei der Metallocen-katalysierten Polymerisation von Styrol tritt häufig Kristallisation des entstehenden syndiotaktischen Polystyrols schon ab ca. 10% Umsatz auf. Dies führt einerseits zur Bildung von Wandbelägen, andererseits auch zu einem extremen Viskositätsanstieg während der Polymerisation, was die Handhabung und Abfuhr der Reaktionswärme insbesondere im technischen Maßstab erschwert.

Zur Lösung dieses Problemes wurden verschiedene Verfahren unter Verwendung spezieller Reaktoren oder Extruder versucht. Die EP-A-0 535 582 beschreibt ein Verfahren zur Herstellung von syndiotaktischem Polystyrol in einem gerührten Festbett, das den Wandbelag zwar reduzieren aber nicht verhindern kann. Der Reaktor muß mit einem speziellen Rührer zur Erzeugung eines homogen Wirbelbettes ausgestattet sein. Die Temperaturkontrolle erfolgt über teilweise Verdampfung von Styrol durch Unterdruck mittels einer aufwendigen Vakuumsteuerung.

EP-A 0 584 646 und EP-A 0 389 939 beschreiben die Herstellung von syndiotaktischem Polystyrol in selbstreinigenden Doppelschneckenextrudern oder Knetern ohne Toträume. Bei beiden Verfahren wird aufgrund der bei höheren Umsätzen sprunghaft ansteigenden Reibungskräfte und der für den Weiterbetrieb notwendigen Motorleistung nicht bis zu vollständigem Umsatz polymerisiert, sondern nur soweit, daß das mit Monomeren getränkte Polymerpulver bei weiteren Verarbeitungsschritten nicht mehr verklumpt.

Im Falle der anionischen Initiierung ist das Verfahren der Dispersionspolymerisation bekannt. Es wird gezielt angewandt zur Herstellung kleiner Polystyrolpartikel, wie beispielsweise in Journal of the Polymer Science, Part A, Polymer Chemistry, Vol. 34 (1996), Seiten 2633 - 2649 beschrieben. Von entscheidender Bedeutung ist die Auswahl des Dispergierhilfsmittels zur Stabilisierung der Dispersion.

Die DE-A 43 30 969 beschreibt ein Verfahren zur Herstellung von Polystyrolmischungen durch Polymerisation von Styrol in einer organischen Flüssigkeit in Gegenwart eines Styrol-Butadien-Blockcopolymeren und einem Metallocenkatalysatorsystems. Für die bevorzugte Ausführungsform werden allerdings Drücke von 5 bis 20 bar benötigt, andernfalls erhält man Polymerisate mit einem sehr niedrigen Molekulargewicht von ca. 30 000 g/mol.

Aufgabe der Erfindung war es daher, ein Verfahren zur Herstellung von syndiotaktischen vinylaromatischen Polymerisaten unter Verwendung von Metallocen-Katalysatoren zur Verfügung zu stellen, das die oben genannten Nachteile nicht aufweist, wobei die Reaktionsmischung niederviskos ist und die Produktivität des Katalysators erhöht.

Demgemäß wurde ein Verfahren zur Herstellung von Polymerisaten aus vinylaromatischen Verbindungen in Dispersion in aliphatischen C₄- bis C₁₀- Kohlenwasserstoffen als Dispergiermedium in Gegenwart eines Dispergierhilfsmittels und eines Katalysators, erhältlich aus
A) einem Übergangsmetallkomplex der II. bis VIII Nebengruppe,
B) einem kationenbildenden Agens und
C) ggf. einer Aluminiumverbindung gefunden, wobei man Schmiermittel zusetzt.

Als vinylaromatische Verbindungen eignen sich besonders Verbindungen der allgemeinen Formel I 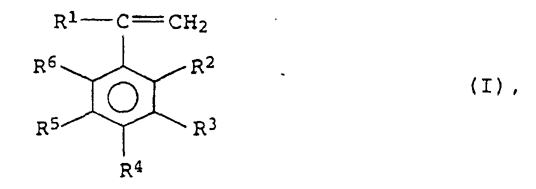 in der die Substituenten folgende Bedeutung haben:
- R¹: Wasserstoff oder C₁- bis C₄-Alkyl,
- R² bis R⁶: unabhängig voneinander Wasserstoff, C₁- bis C₁₂-Alkyl, C₆- bis C₁₈-Aryl, Halogen oder wobei zwei benachbarte Reste gemeinsam für 4 bis 15 C-Atome aufweisende cyclische Gruppen, beispielsweise C₄-C₈-Cycloalkyl oder anellierte Ringsysteme stehen.

Bevorzugt werden vinylaromatische Verbindungen der Formel I eingesetzt, in denen
R¹ Wasserstoff bedeutet.

Als Substituenten R² bis R⁶ kommen insbesondere wasserstoff, C₁- bis C₄-Alkyl, Chlor oder Phenyl, Biphenyl, Naphthalin oder Anthracen in Betracht. Zwei benachbarte Reste können auch gemeinsam für 4 bis 12 C-Atome aufweisende cyclische Gruppen stehen, so daß sich als Verbindungen der allgemeinen Formel I beispielsweise Naphthalinderivate oder Anthracenderivate ergeben.

Beispiele für solche bevorzugten Verbindungen sind:
Styrol, p-Methylstyrol, p-Chlorstyrol, 2,4-Dimethylstyrol, 4-Vinylbiphenyl, 2-Vinylnaphthalin oder 9-Vinylanthracen.

Es können auch Mischungen verschiedener vinylaromatischer Verbindungen eingesetzt werden, wobei eine Komponente auch weitere Kohlenwasserstoffreste wie Vinylgruppen, Allylgruppen, Methallylgruppen, Butenyl- oder Pentenylgruppen, vorzugsweise Vinylgruppen am Phenylring tragen kann. Vorzugsweise wird jedoch nur eine vinylaromatische Verbindung verwendet.

Besonders bevorzugte vinylaromatische Verbindungen sind Styrol und p-Methylstyrol.

Die Herstellung von vinylaromatischen Verbindungen der allgemeinen Formel I ist an sich bekannt und beispielsweise in Beilstein 5, 367, 474, 485 beschrieben.

Als Dispergierhilfsmittel eignen sich Blockcopolymere mit mindestens einem Dienblock B und mindestens einem Block S aus einem Copolymeren eines vinylaromatischen Monomeren der allgemeinen Formel (I) und 1,1-Diphenylethylen oder dessen an den aromatischen Ringen ggf. mit Alkylgruppen mit bis zu 22 C-Atomen substituierten Derivaten, wie sie beispielsweise in der DE-A 44 20 917 beschrieben sind.

Beispielsweise eignen sich Blöckcopolymerisate mit Blöcken S und B der allgemeinen Strukturen (S-B)ₙ, S-B-S, B-S-B, X[(S-B)ₙ]ₘ, X[(B-S)_{n]m}, X(S-B-S)ₘ und X(B-S-B)ₘ, wobei X für den Rest eines m-funktionellen Kopplungsmittels oder eines m-funktionellen Initiators, n eine ganze Zahl im Bereich von 1 bis 5 und m für eine ganze Zahl im Bereich von 2 bis 20 stehen.

Als Dienkomponente für den Block B eignen sich grundsätzlich alle Diene, bevorzugt werden jedoch solche mit konjugierten Doppelbindungen wie Butadien, Isopren, Dimethylbutadien und Phenylbutadien. Der Dienblock kann partiell oder vollständig hydriert oder unhydriert sein. Die Molekulargewichte Mw der Blöcke B liegen im allgemeinen im Bereich von 10 000 bis 500 000, vorzugsweise von 50 000 bis 350 000 und besonders bevorzugt von 70 000 bis 250 000 g/mol.

Die Blöcke S bestehen aus einem Copolymeren eines vinylaromatischen Monomeren der allgemeinen Formel (I) und 1,1-Diphenylethylen oder dessen an den aromatischen Ringen ggf. mit Alkylgruppen mit bis zu 22 C-Atomen, bevorzugt mit 1 bis 4 C-Atomen wie Methyl, Ethyl, i- und n-Propyl und n-,i- oder tert.-Butyl substituierten Derivaten. Besonders bevorzugt wird jedoch das unsubstituierte 1,1-Diphenylethylen selbst eingesetzt. Der Anteil an Diphenylethylen im Block S liegt im Bereich von 15 bis 65 Gew.%, vorzugsweise von 25 bis 60 Gew.%. Das molare Verhältnis der Einheiten, die sich vom vinylaromatischen Monomer ableiten, zu Einheiten, die sich von 1,1-Diphenylethylen ableiten liegt im allgemeinen im Bereich von 1 : 1 bis 1: 25, vorzugsweise von 1 : 1,05 bis 1 : 15 und besonders bevorzugt im Bereich von 1 : 1,1 bis 1 : 10.

Der Copolymerblock S ist vorzugsweise statistisch aufgebaut und besitzt ein Molekulargewicht Mw von im allgemeinen 20 000 bis 500 000, vorzugsweise 50 000 bis 300 000. Besonders bevorzugt ist ein Copolymerblock S aus Styrol und 1,1-Diphenylethylen.

Das Verhältnis der Blöcke S zu B liegt im allgemeinen im Bereich von 90 : 10 bis 20 : 80 besonders bevorzugt zwischen 90 : 15 und 65 : 35. Die Blockübergänge können sowohl scharf getrennt, wie auch "verschmiert" sein. Unter "verschmiertem" Übergang versteht man, daß die angrenzenden Blöcke B und S im Übergangsbereich auch Monomere des jeweils anderen Blockes enthalten können.

Die Blockcopolymeren können nach üblichen Methoden der anionischen Polymerisation hergestellt werden, wie sie beispielsweise in M. Morton, Anionic Polymerisation, Principles and Practice, Academic Press, New York 1983, beschrieben sind. Die anionische Polymerisation wird mittels metallorganischer Verbindungen initiiert. Bevorzugt sind Verbindungen der Alkalimetalle, insbesondere des Lithiums. Beispiele für Initatoren sind Lithiumalkyle wie Methyllithium, Ethyllithium, iso-Propyllithium, n-, sec.- oder tert.-Butyllithium. Besonders bevorzugt wird n- oder s-Butyllithium eingesetzt. Als Lösungsmittel eignen sich gegenüber dem metallorganischen Initiator inerte Lösungsmittel. Zweckmäßigerweise verwendet man aliphatische oder aromatische Kohlenwasserstoffe. Geeignete Lösungsmittel sind beispielsweise Cyclohexan, Methylcyclohexan, Benzol, Toluol, Ethylbenzol oder Xylol.

Zur Beeinflußung der Polymerisationsparameter können dem Lösungsmittel geringe Mengen polarer, aprotischer Substanzen zugesetzt werden. Geeignet sind beispielsweise Ether wie Diethylether, Diisopropylether, Diethylenglykoldimethylether, Diethylenglykoldibutylether oder insbesondere Tetrahydrofuran sowie tertiäre Amine wie z.B. Tetramethylethylendiamin oder Pyridin. Das polare Cosolvens wird dem unpolaren Lösungsmittel in einer geringen Menge von ca 0,01 bis 5 Vol.-% zugesetzt. Besonders bevorzugt ist Tetrahydrofuran in einer Menge von 0,1 bis 0,3 Vol.-%.

Gemäß einer bevorzugten Ausführungsform des erfindungsgemäßen Verfahrens kann mindestens ein verzweigendes Monomer, eingesetzt werden.

Als verzweigende Monomere können Verbindungen der allgemeinen Formel II 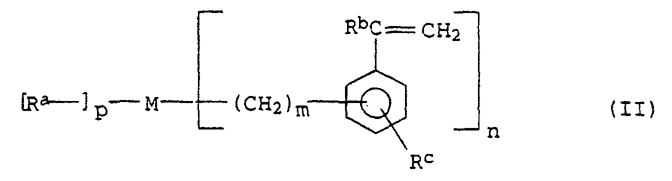 verwendet werden, in der die Variablen die folgende Bedeutung haben:
- R^{a}: Wasserstoff, Halogen, oder ein inerter organischer Rest mit bis zu 20 C-Atomen, wobei R^{a} im Falle von p ≽ 2 gleich oder verschieden sein kann und zwei Reste R^{a} zusammen mit dem an sie gebundenen Metallatom einen 3 bis 8-gliedrigen Ring bilden können und R^{a} ferner ein üblicher Komplexligand sein kann, wenn M ein Übergangsmetall darstellt,
- R^{b}: Wasserstoff, C₁-C₄-Alkyl oder Phenyl;
- R^{c}: Wasserstoff, C₁-C₄-Alkyl, Phenyl, Chlor oder ein ungesättigter Kohlenwasserstoffrest mit 2 bis 6 C-Atomen;
- M: C, Si, Ge, Sn, B, Al, Ga, N, P, Sb, Ti, Zr, Hf, V, Nb, Ta, Cr, Mo, W, Mn, Fe, Ru, Os, Co, Rh, Ir, Ni, Pd, Pt, Cu, Zn, Cd,
- n: 2-6;
- m: 0-20;
- p: 0-4;
mit der Maßgabe, daß die Summe aus n + p der Valenz von M entspricht.

Diese Monomere lassen sich z.B. über die Grignard-Verbindungen der Chlor(alkyl)styrole mit den entsprechenden Kohlenstoff-, Metall- oder Übergangsmetallverbindungen, z.B. den Halogenverbindungen erhalten. Solche Umsetzungen sind beispielsweise für den Fall, daß M Silizium, Germanium oder Zinn bedeutet in K. Nakanishi, J. Chem. Soc. Perkin Trans I, 1990, Seite 3362 beschrieben.

Besonders bevorzugt sind verzweigende Monomerbausteine der Formel II, in der M Kohlenstoff, Silizium, Germanium, Zinn oder Titan bedeutet, da sie leicht zugänglich sind. Der Index m steht vorzugsweise für 0 bis 8, besonders bevorzugt für 0 bis 4.

Beispielhaft können die Titan enthaltenden Monomeren der Formel IIa 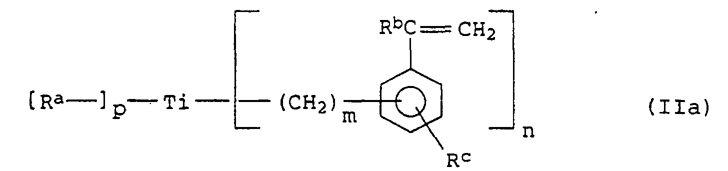 und die Titanverbindung IIb 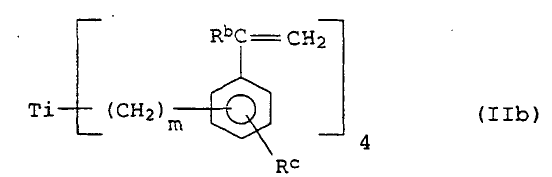 in der R^{a}, R^{b} und R^{c} sowie m, n und p die obengenannte Bedeutung haben, als verzweigende Monomere eingesetzt werden.

Der oder die inerten organischen Reste R^{a} haben keine wesentliche Bedeutung für das Verfahren. Sie dienen vielmehr lediglich zur Absättigung der freien Valenzen am M und können nach leichter Zugänglichkeit ausgewählt werden. Beispielsweise kommen aliphatische, cycloaliphatische, Aryl-, Heteroaryl- oder Aralkylreste in Betracht. Aliphatische Reste sind u.a. Alkyl-, Alkoxy-, Alkenyl- oder Alkinyl-Reste mit z.B. 1 bis 2 bzw. 20 C-Atomen. Cycloaliphatische Reste sind u.a. Cycloalkyl- oder Cycloalkanreste mit 3 bis 8 C-Atomen. Anstelle einer Methylengruppe im Alkyl- oder Cycloalkylrest kann auch ein Sauerstoffatom in Etherfunktion vorliegen. Arylreste sind beispielsweise Phenyl- oder Naphthylreste, wobei auch zwei Phenylgruppen über ein Sauerstoff miteinander verbunden sein können. Aralkylreste sind z.B. solche mit 7 bis 20 C-Atomen, die sich durch Kombination eines Phenylrestes mit einem Alkylrest ergeben. Heteroarylreste sind z.B. Pyridyl, Pyrimidyl oder Furylreste. Die genannten Reste können auch weiter substituiert sein, z.B. durch Alkyl, Alkoxy, Halogen wie Fluor, Chlor oder Brom, Cyano, Nitro, Epoxy, Carbonyl, Estergruppierungen, Amide usw. Zwei der Reste R^{a} können auch mit dem Atom M einen 3 bis 6-gliedrigen Ring bilden, z.B. indem zwei Reste R^{a} eine Alkylenkette bilden, in der auch ein oder mehrere CH₂-Gruppen durch O in Etherfunktion ersetzt sein können.

Wenn M für ein Übergangsmetall steht, kann R^{a} auch übliche σ- oder π-gebundene Komplexliganden bedeuten wie Ethylen, Allyl, Butadien, Cyclopentadien, einfach oder mehrfach substituierte Cyclopentadiene, wie Methylcyclopentadien oder Pentamethylcyclopentadien, Benzol, Cyclohexadien, Cycloheptatrien, Cycloheptadien, Cyclooctatetraen, Cyclooctatrien, Cyclooctadien, Carbonyl, Oxalato, Cyano, Isonitril, Fulminato-C, Fulminato-O, Cyanato, Distickstoff, Ethylendiamin, Diethylentriamin, Triethylentetramin, Ethylendiamintetraacetat, Nitrosyl, Nitro, Isocyano, Pyridin, α,α-Dipyridyl, Trifluorphoshan, Phosphan, Diphosphan, Arsan, Acetylacetonato.

Der Rest R^{b} bedeutet besonders bevorzugt Wasserstoff oder Methyl. R^{c} steht für Wasserstoff, C₁-C₄-Alkyl wie Methyl, Ethyl, Propyl, Isopropyl sowie n-Butyl und die Butylisomeren, Phenyl, Chlor oder einen ungesättigten Kohlenwasserstoffrest mit 2 bis 6 C-Atomen wie Vinyl, Allyl, Methallyl, Butenyl oder Pentenyl.

Der verzweigende Monomerbaustein wird zweckmäßigerweise in einem Molverhältnis von vinylaromatischem Monomer zu verzweigendem Baustein zwischen 10 000 000 : 1 und 10 : 1 eingesetzt.

Als Katalysatorkomponente A) werden Übergangsmetallkomplexe der II. bis VIII. Nebengruppe, bevorzugt der III. bis VIII. Nebengruppe verwendet. Ganz besonders bevorzugt sind Komplexe der Übergangsmetalle der IV. Nebengruppe, also von Titan, Zirkonium oder Hafnium.

Enthält der verzweigende Monomerbaustein der Formel II schon ein Übergangsmetall M, insbesondere Titan, so kann er je nach verwendeter Konzentration neben seiner Funktion als Verzweigungsbaustein auch gleichzeitig als Katalysatorkomponente A) verwendet werden.

Bevorzugt werden als Katalysatorkomponente A) Metallocenkomplexe, besonders bevorzugt solche der allgemeinen Formel III 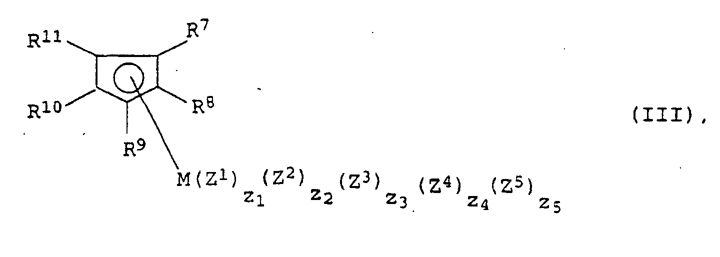 in der die Substituenten und Indices folgende Bedeutung haben:
- R⁷ bis R¹¹: Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen, beispielsweise für annelierte Ringsysteme ist 4 bis 12 C-Atomen stehen können, oder Si(R¹²)₃,
- mit R¹²: C₁- bis C₁₀-Alkyl, C₆- bis C₁₅-Aryl oder C₃- bis C₁₀-Cycloalkyl,
- M: ein Metall der III. bis VI. Nebengruppe des Periodensystems der Elemente oder ein Metall der Lanthanidenreihe
- Z¹ bis Z⁵: Wasserstoff, Halogen, C₁- bis C₁₀-Alkyl, C₆- bis C₁₅-Aryl, C₁- bis C₁₀-Alkoxy oder C₁- bis C₁₅-Aryloxy
und
- Z₁ bis Z₅: 0, 1, 2, 3, 4 oder 5, wobei die Summe Z₁+Z₂+Z₃+Z₄+Z₅ der Wertigkeit von M abzüglich der Zahl 1 entspricht,
eingesetzt.

Besonders bevorzugte Metallocenkomplexe der allgemeinen Formel III sind solche, in denen
- M: für ein Metall der IV. Nebengruppe des Periodensystems der Elemente steht, also für Titan, Zirkonium oder Hafnium, insbesondere für Titan
und
- Z¹ bis Z⁵: C₁- bis C₁₀-Alkyl, C₁- bis C₁₀-Alkoxy oder Halogen bedeuten.

Beispiele für solche bevorzugten Metallocenkomplexe sind:
Pentamethylcyclopentadienyltitantrichlorid,
Pentamethylcyclopentadienyltitantrimethyl und
Pentamethylcyclopentadienyltitantrimethylat.

Es können auch solche Metallocenkomplexe, wie in der EP-A 584 646 beschrieben, eingesetzt werden.

Mischungen verschiedener Metallocenkomplexe können auch verwendet werden.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Als kationenbildende, insbesondere metalloceniumionenbildende Verbindung B) können die Katalysatorsysteme offenkettige oder cyclische Alumoxanverbindungen enthalten.

Geeignet sind beispielsweise offenkettige oder cyclische Alumoxanverbindungen der allgemeinen Formel IV oder V 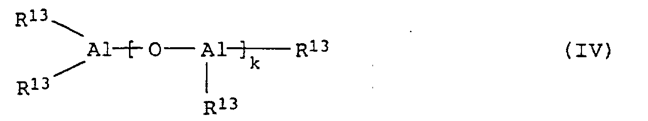 oder 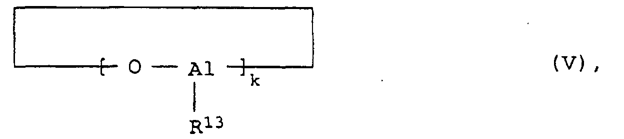 wobei
- R¹³: eine C₁- bis C₄-Alkylgruppe bedeutet, bevorzugt Methyl- oder Ethylgruppe und k für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß k als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe und die oligomere Alumoxanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis 10⁶:1, insbesondere im Bereich von 10:1 bis 10⁴:1, liegt.

Als metalloceniumionenbildende Verbindung B) können auch Koordinationskomplexverbindungen, ausgewählt aus der Gruppe der starken, neutralen Lewissäuren, der ionischen Verbindungen mit lewissauren Kationen und der ionischen Verbindungen mit Brönstedsäuren als Kationen eingesetzt werden.

Als starke neutrale Lewissäuren sind Verbindungen der allgemeinen Formel VI

M¹X¹X²X³ (VI)

bevorzugt, in der
- M¹: ein Element der III. Hauptgruppe des Periodensystems bedeutet, insbesondere B, Al oder Ga, vorzugsweise B,
- X¹,X² und X³: für Wasserstoff, C₁- bis C₁₀-Alkyl, C₆- bis C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel VI, in der X¹, X² und X³ gleich sind, vorzugsweise Tris(pentafluorphenyl)boran. Diese Verbindungen sowie Verfahren zu ihrer Herstellung sind an sich bekannt und beispielsweise in der WO 93/5067 beschrieben.

Als ionische Verbindungen mit lewissauren Kationen sind Verbindungen der allgemeinen Formel VII

(Y^{a+})Q₁Q₂ ... Q_{z}]^{d+} (VII)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁- bis C₂₈-Alkyl, C₆- bis C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₁- bis C₁₀-Cycloalkyl, welches gegebenenfalls mit C₁- bis C₁₀-Alkylgruppen substituiert sein kann, Halogen, C₁- bis C₂₈-Alkoxy, C₆- bis C₁₅-Aryloxy oder Silyl- oder Mercaptylgruppen, wie Trimethylsilyl.
- a: für ganze Zahlen von 1 bis 6 steht,
- z: für ganze Zahlen von 0 bis 5
- d: der Differenz a - z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1' -Dimethylferrocenylkation zu nennen.

Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 93/03067 genannt, bevorzugtes Kation ist das N,N-Dimethylanilinium.

Es hat sich als besonders geeignet erwiesen, wenn das molare Verhältnis von Bor aus der metalloceniumionenbildenden Verbindung zu Übergangsmetall aus dem Metallocenkomplex im Bereich von 0,1:1 bis 10:1 liegt, insbesondere im Bereich von 1:1 bis 5:1.

Das bei dem erfindungsgemäßen Verfahren eingesetzte Katalysatorsystem kann als Komponente C) eine Aluminiumverbindung enthalten. Diese kann z.B. durch die allgemeine Formel VIII

AlR¹⁴R¹⁵R¹⁶ (VIII),

in der
- R¹⁴ bis R¹⁶: für Wasserstoff, Fluor, Chlor, Brom, Jod oder C₁- bis C₁₂-Alkyl stehen, bevorzugt für C₁- bis C₈-Alkyl,
charakterisiert werden.

Vorzugsweise sind die Reste R¹⁴ bis R¹⁵ gleich und stehen für C₁-C₆-Alkyl wie Methyl, Ethyl, Isobutyl oder n-Hexyl, R¹⁶ bedeutet vorzugsweise Wasserstoff.

Bevorzugt ist die Komponente C) in einer Menge von 1 : 2000 bis 1 : 1, insbesondere 1 : 800 bis 1 : 10 (molares Verhältnis Übergangsmetall aus III zu Al aus VIII) im Katalysatorsystem enthalten.

Als Lösungsmittel für die Metallocenkomplexe werden üblicherweise aromatische Kohlenwasserstoffe eingesetzt, bevorzugt mit 6 bis 20 C-Atomen, insbesondere Xylole, Toluol und Ethylbenzol sowie deren Mischungen.

Die Metallocenkomplexe können ungeträgert oder getragen eingesetzt werden.

Geeignete Trägermaterialien sind beispielsweise Kieselgele, bevorzugt solche der Formel SiO₂· bAl₂O₃, worin b für eine Zahl im Bereich von 0 bis 2 steht, vorzugsweise 0 bis 0,5; also im wesentlichen Alumosilikate oder Siliciumdioxid. Vorzugsweise weisen die Träger einen Teilchendurchmesser im Bereich von 1 bis 200 µm auf, insbesondere 30 bis 80 µm. Derartige Produkte sind im Handel erhältlich, z.B. als Silica Gel 332 der Firma Grace.

Weitere Träger sind u.a. feinteilige Polyolefine, beispielsweise feinteiliges Polypropylen oder Polyethylen, aber auch Polyethylenglycol, Polybutylenterephthalat, Polyethylenterephthalat, Polyvinylalkohol, Polystyrol, syndiotaktisches Polystyrol, Polybutadien, Polycarbonate oder deren Copolymere.

Das Molverhältnis von Übergangsmetallkatalysator A) zu vinylaromatischem Monomer beträgt im allgemeinen 1 : 1000 bis 1 : 10 000 000, bevorzugt jedoch 1 : 2000 bis 1 : 1 000 000.

Das erfindungsgemäße Verfahren wird als Dispersionspolymerisation durchgeführt. Als Dispergiermedium werden aliphatische Kohlenwasserstoffe mit 4 bis 10 Kohlenstoffatomen oder Kohlenwasserstoffgemische eingesetzt. Beispiele hierfür sind Butan, Pentan, Hexan oder Heptan. Die Konzentration der zu polymerisierenden Monomeren im Dispergiermedium beträgt i.a. zwischen 5 und 65 Volumenprozent, vorzugsweise 10 bis 50 Vol.-%.

Vorzugsweise wird das Dispergierhilfsmittel in einer Menge von 0,1 bis 10 Gew.%, bevorzugt-von 1 bis 8 Gew.%, bezogen auf die eingesetzte vinylaromatische Verbindung, verwendet. Zweckmäßig wird es in dem zu polymerisierenden vinylaromatischen Monomer gelöst.

Als Schmiermittel sind organische und anorganische Verbindungen geeignet. Organische Schmiermittel sind beispielsweise Schmieröle wie Mineralöle, also flüssige Produkte, die aus Erdöl, Steinkohlenteer oder Braunkohlenteer gewonnen werden, wie Benzine, Weißöle, Petroleum oder Gasöle sowie Polyetheröle, Esteröle und Siliconöle oder auch Schmierfette. Anorganische Schmiermittel sind beispielsweise Molybdän (IV)-sulfid oder Titanium(IV)-sulfid. Weitere geeignete Schmiermittel (auch Gleitmittel genannt) sind Glycerinester oder Fettsäuren. Bevorzugt sind Kohlenwasserstoffe wie Paraffinöle, Paraffine, polare und unpolare Polyethylenwachse, Alkohole wie Cetylalkohol oder Stearylalkohol, Carbonsäuren wie Laurinsäure, Palmitinsäure oder Stearinsäure, Metallsalze von Carbonsäuren wie Ca-Stearat, Zn-Stearat, Carbonsäureamide und Carbonsäureester wie Ethylstearat, n-Butylstearat oder Distearylphthalat. Weitere Gleitmittel sind beispielsweise im Taschenbuch der Kunststoff-Additive, herausgegeben von Gächter und Müller im Carl Hanser Verlag, 2. Ausgabe, Seite 309 bis 327 beschrieben.

weiterhin können als Schmiermittel Polymere wie Polystyrol, bevorzugt niedermolekulares Polystyrol mit Molekulargewichten M_{w} von 2000 bis 40 000, Polyethylen, Polypropylen oder auch Copolymere aus Ethylen und anderen 1-Alkenen eingesetzt werden.

Besonders bevorzugt sind Distearylphthalat und Mineralölkohlenwasserstoffe wie Weißöle. Auch Mischungen verschiedener Schmiermittel können eingesetzt werden.

Die Menge an Schmiermitteln kann in weiten Bereichen schwanken, bevorzugt sind 0,01 bis 50 Gew.-%, insbesondere 0,1 bis 40 Gew.-% und besonders bevorzugt 0,2 bis 10 Gew.-%, bezogen auf eingesetztes Monomer.

Bevorzugt werden die Schmiermittel vor Zugabe des Übergangsmetallkomplexes zu der vinylaromatischen Verbindung, dem Dispergator, dem Dispergiermedium, dem kationenbildenen Agens und ggf. der Aluminiumverbindung gegeben.

Die Polymerisationsbedingungen sind unkritisch. Vorzugsweise polymerisiert man bei Temperaturen von 50 bis 100°C, bei einem Druck von 0,05 bis 30 bar, bevorzugt von 0,1 bis 20 bar. Im Allgemeinen ist die Polymerisation nach 0,5 bis 10 Stunden beendet. Die Polymerisation kann durch Zugabe von protischen Verbindungen, beispielsweise Methanol, abgebrochen werden und das Dispergiermedium durch Filtration oder Verdampfung entfernt und dem Prozeß zurückgeführt werden.

Das erfindungsgemäße Verfahren ist technisch einfach und erlaubt die Herstellung von vinylaromatischen Polymerisaten mit hohem syndiotaktischem Anteil bei niedrigen Viskositäten von unter 5 mPas bei hoher Katalysatorproduktivität. Weiterhin fallen die entstehenden Polymerisate in Partikelform an. Die entstehenden Polymerisate eignen sich zur Herstellung von Fasern, Folien und Formkörpern.

### Beispiele

### Reinigung von 1,1-Diphenylethylen (DPE)

Rohes DPE (Aldrich bzw. Herstellung durch Umsetzung von Phenylmagnesiumbromid mit Acetophenon, Acetylierung mit Essigsäureanhydrid und thermischer Eliminierung von Essigsäure) wird über eine Kolonne mit mindestens 50 theoretischen Böden (Drehbandkolonne; für größere Mengen Kolonne mit Sulzer-Packungen) auf 99,8 % Reinheit ausdestilliert. Das meist schwach gelbe Destillat wird über eine 20 cm Alox-Säule (Woelm-Alumina für die Chromatographie, wasserfrei) filtriert, mit 1,5 n sec-Butyllithium bis zur kräftigen Rotfärbung titriert und im Vakuum (1 mbar) überdestilliert. Das so erhaltene Produkt ist vollkommen farblos und kann direkt in die anionische Polymerisation eingesetzt werden.

### Reinigung der Monomeren und Lösemittel

Das als Lösemittel eingesetzte Cyclohexan (H) wurde über wasserfreiem Aluminiumoxid getrocknet und mit dem Addukt aus sec-Butyllithium und 1,1-Diphenylethylen bis zur Gelbfärbung austitriert. Das Butadien (Bu) wurde von Triisobutylaluminium, das 1,1-Diphenylethylen (DPE) von sec-Butyllithium (s-BuLi) abdestilliert. Als Initiator wurde eine 0,5 molare s-BuLi-Lösung in Cyclohexan verwendet. Styrol (S) wurde direkt vor der Verwendung über Aluminiumoxid getrocknet.

Alle Polymerisationen wurden unter nachgereinigtem Stickstoff unter rigorosem Ausschluß von Luft und Feuchtigkeit durchgeführt. Die Reaktoren wurden vor der Befüllung mehrere Stunden mit einer Lösung von 1,1-Diphenylethylen und sec.-Butyllithium in Cyclohexan unter Rückfluß vorbehandelt.

In den folgenden Beispielen steht Bu für 1,3-Butadien, S für Styrol und DPE für 1,1-Diphenylethylen. Weiterhin beziehen sich die Verhältnisangaben auf das Gewicht.

### Herstellung eines Bu-S/DPE-Blockcopolymeren

### Dispergator Dl

In einem 10 1 Rührreaktor wurden 7,1 l Cyclohexan sowie einige Tropfen (ca 2 ml) DPE vorgelegt und mit einer 0,278 molaren sec.-Butyllithiumlösung bis zur beginnenden Rotfärbung austitriert. Nach Zugabe von 15,1 ml (4,2 mmol) der 0,278 molaren sec.-Butyllithiumlösung wurden 1,6 l (19,4 mol) 1,3-Butadien bei 70°C portionsweise (100 ml) innerhalb von einer Stunde zugegeben und eine weitere Stunde bei 70°C polymerisiert. Die Molekulargewichte des erhaltenen Polybutadienblockes wurden an einer Probe mittels Gelpermeationschromatographie (GPC) und Polybutadien-Eichung bestimmt: M_{w} = 248 000 g/mol, M_{w}/Mₙ = 1,28, M(Peakmaximum = 226 000 g/mol. Zu dem entstandenen Polybutadienblock wurden nacheinander im Abstand von 15 Minuten 98,3 ml (0,56 mol) 1,1-Diphenylethylen und 259 ml (2,25 mol) Styrol zugegeben und weitere 5 Stunden bei 70°C polymerisiert. Nach Abklingen der Reaktion wurde mit Ethanol bis zur Farblosigkeit titriert und mit CO₂/Wasser sauer gestellt. Die farblose Lösung wurde in einem Entgasungsextruder unter Vakuum vom Lösungsmittel befreit und granuliert.

GPC (Polybutadieneichung): zwei Peaks 1. Peak (20% Anteil) M(Peakmaximum) = 32 000 g/mol; 2. Peak (80% Anteil): Peakmaximum) bei 260 000 g/mol.

### Beispiele 1 bis 4

In einen mit Argon intertisierten Autoklaven wurden unter Rühren 532 ml Pentan und eine Mischung von 2,61 g des Dispergators D1 in 104,2 g (1 mol) Styrol eingebracht. Hierzu wurden 8,16 ml einer 1,53 molaren Lösung von Methylaluminoxan (MAO) in Toluol (bezogen von der Fa. Witco) und 2,08 ml einer 1,0 molaren Lösung von Diisobutylaluminiumhydrid (DIBAH)in Cyclohexan (bezogen von der Fa. Aldrich) gegeben. Dieser Mischung wurde dann vor Zugabe des Übergangsmetallkomplexes eine bestimmte Menge an Schmiermittel zugegeben. Anschließend wurden bei Raumtemperatur 1,5 l Wasserstoff aufgepreßt und die Reaktionslösung auf 80°C erwärmt. Dann wurden 1,14 mg (0,05 mmol) Pentamethylcyclopentadienyltitantrimethyl Cp*TiMe₃ hinzugegeben und es baute sich ein Innendruck von 7,5 bar auf. Nach 2 Stunden wurde die Polymerisation durch Zugabe von 10 ml Methanol abgebrochen. Nach dem Abkühlen auf Raumtemperatur wurde eine homogene gut fließende Suspension erhalten. Das erhaltene Polymer wurde mit Methanol gewaschen und bei 50°C im Vakuum getrocknet.

Die Molekulargewichte Mw und Mn wurden mittels Hochtemperatur-Gelpermetionschromatographie GPC (135°C, 1,2,4-Trichlorbenzol, Polystyrolstandard) bestimmt. Der syndiotaktische Anteil wurde durch ¹³C-NMR-Spektroskopie ermittelt. Die Teilchengrößen lagen im Bereich von 2 bis 10 µm und wurde an einer in Immersionsöl aufgeschlämmten Probe zwischen zwei planen Glasplättchen unter dem Transmissionsmikroskop (Axiophot der Fa. Carl Zeiss) bestimmt.

Der Umsatz bezieht sich auf die Menge an eingesetztem Styrol.

### Vergleichsversuch V1

Es wurde ohne Zusatz eines Schmiermittels analog den Beispielen 1 bis 4 polymerisiert.

| Bsp. | Schmiermittel | M_{w} [g/mol] | M_{w}/Mn | Viskosität [mPas] | Umsatz [%] | Produktivität [kg s-Ps/gTi] |
|---|---|---|---|---|---|---|
| 1 | 0,5 Gew.-% Winog 60 | 422 800 | 1,9 | 2,99 | 67 | 69,2 |
| 2 | 5 Gew.-% Winog 60 | 278 500 | 2,0 | 4,81 | 73 | 82,1 |
| 3 | 1 Gew.-% Distearylphthalat | 296 700 | 2,0 | 2,43 | 69 | 49,7 |
| 4 | 8 Gew.-% Winog 70 | 301 400 | 2,2 | 4,01 | 71 | 66,5 |
| V1 | - | 321 500 | 2,1 | 2,35 | 34 | 15,4 |

Die Syndiotaktizität der Polymeren war ≥ 95%.

Die Gew.%-Angaben der Schmiermittel beziehen sich auf eingesetztes Monomer Styrol.

Winog®60 und Winog®70 sind Weißöle (Mineralölkohlenwasserstoffe) nach DAB 9 der Wintershall Mineralöl GmbH. Winog 70 hat eine dynamische Viskosität [nach DIN 51562] von 136 mPas, ein Molekulargewicht im Bereich von 400 bis 550 und eine Dichte von 0,865 g/cm³.
Winog 60 hat eine dynamische Viskosität [nach DIN 51562] von 180 mPas und einer Dichte von 0,863 g/cm³.

## Patentansprüche

1. Verfahren zur Herstellung von Polymerisaten aus vinylaromatischen Verbindungen in Dispersion in aliphatischen C₄- bis C₁₀ - Kohlenwasserstoffen als Dispergiermedium in Gegenwart eines Dispergierhilfsmittels und eines Katalysators, erhältlich aus A) einem Übergangsmetallkomplex der II. bis VIII. Nebengruppe, B) einem kationenbildenden Agens und C) gegebenenfalls einer Aluminiumverbindung, **dadurch gekennzeichnet, daß** man Schmiermittel zusetzt.

2. Verfahren nach Anspruch 1, dadurch gekennzeichent, daß man als Dispergierhilfsmittel Blockcopolymere mit mindestens einem Dienblock B und mindestens einem Block S aus einem Copolymeren eines vinylaromatischen Monomeren und 1,1-Diphenylethylen oder dessen an den aromatischen Ringen ggf. mit Alkylgruppen mit bis zu 22 C-Atomen substituierten Derivaten verwendet.

3. Verfahren nach Anspruch 2, **dadurch gekennzeichnet, daß** das Blockcopolymere Polybutadien oder Polyisopren einpolymerisiert enthält und der Dienblock B partiell oder vollständig hydriert oder nicht hydriert ist.

4. Verfahren nach den Ansprüchen 2 und 3, **dadurch gekennzeichnet, daß** der Block S des Blockcopolymeren aus einem Copolymerisat aus Styrol und 1,1-Diphenylethylen besteht.

5. Verfahren nach den Ansprüchen 1 bis 4, **dadurch gekennzeichnet, daß** man das Schmiermittel in einer Menge von 0,01 bis 50 Gew.-%, bezogen auf das eingesetzte Monomer, verwendet.

6. Verfahren nach den Ansprüchen 1 bis 5, **dadurch gekennzeichnet, daß** man einen verzweigenden Monomerbaustein, der mindestens zwei vinylaromatische Reste enthält, in einem Molverhältnis von vinylaromatischen Monomeren zu verzweigendem Baustein zwischen 10 000 000 : 1 und 10 : 1 verwendet.

7. Verfahren nach den Ansprüchen 1 bis 6, **dadurch gekennzeichnet, daß** man als Katalysatorkomponente A) einen Metallocenkomplex der allgemeinen Formel (III) 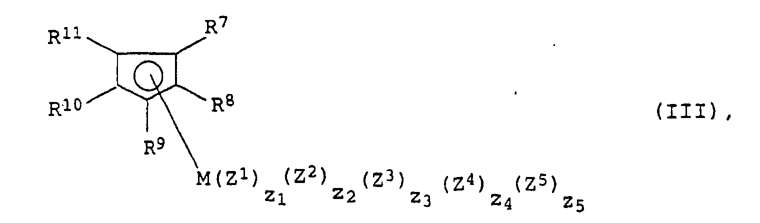 in der die Substituenten und Indices folgende Bedeutung haben:
R⁷ bis R¹¹ Wasserstoff, C₁- bis C₁₀-Alkyl, 5- bis 7-gliedriges Cycloalkyl, das seinerseits C₁- bis C₆-Alkylgruppen als Substituenten tragen kann, C₆- bis C₁₅-Aryl oder Arylalkyl und wobei gegebenenfalls auch zwei benachbarte Reste gemeinsam für 4 bis 15 C-Atome aufweisende cyclische Gruppen stehen können, oder Si(R¹²)₃,
mit R¹² C₁- bis C₁₀-Alkyl, C₆- bis C₁₅-Aryl oder C₃- bis C₁₀-Cycloalkyl,
M ein Metall der III. bis VI. Nebengruppe des Periodensystems der Elemente oder ein Metall der Lanthanidenreihe
z¹ bis z⁵ Wasserstoff, Halogen, C₁- bis C₁₀-Alkyl, C₆- bis C₁₅-Aryl, C₁- bis C₁₀-Alkoxy oder C₁- bis C₁₅-Aryloxy
und
z₁ bis z₅ 0, 1, 2, 3, 4 oder 5, wobei die Summe z₁+z₂+z₃+z₄+z₅ der Wertigkeit von M abzüglich der Zahl 1 entspricht,
einsetzt.

8. Verfahren nach den Ansprüchen 1 bis 7, **dadurch gekennzeichnet, daß** als kationenbildende Verbindung B) offenkettige oder cyclische Alumoxanverbindungen der allgemeinen Formel IV oder V 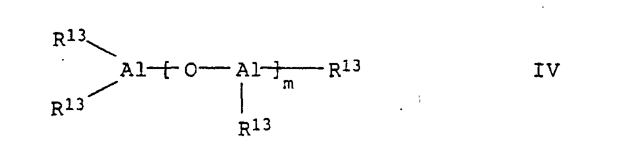 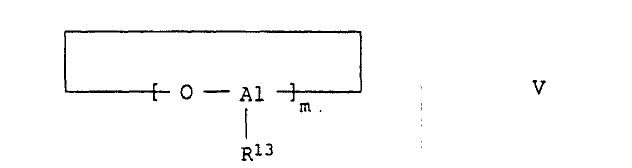 wobei
R¹³ eine C₁- bis C₄-Alkylgruppe bedeutet und m für eine ganze Zahl von 5 bis 30 steht,
eingesetzt werden.

9. Verfahren nach den Ansprüchen 1 bis 7, **dadurch gekennzeichnet, daß** als kationenbildende Verbindung B) eine Koordinationskomplexverbindung, ausgewählt aus der Gruppe der starken, neutralen Lewissäuren, der ionischen Verbindungen mit lewissauren Kationen und der ionischen Verbindungen mit Brönsted-Säuren als Kationen eingesetzt wird.

## Claims

1. A process for preparing polymers of vinylaromatic compounds in dispersion in aliphatic C₄-C₁₀ hydrocarbons as dispersion medium in the presence of a dispersing auxiliary and a catalyst, obtainable from A) a transition metal complex of subgroups II to VIII, B) a cation-forming agent and C), if desired, an aluminum compound, which comprises adding lubricants.

2. A process as claimed in claim 1, wherein the dispersing auxiliary used comprises block copolymers having at least one diene block B and at least one block S comprising a copolymer of a vinylaromatic monomer and 1,1-diphenylethylene or its aromatic ring-substituted derivatives, including those substituted by alkyls of up to 22 carbons.

3. A process as claimed in claim 2, wherein the block copolymer comprises polybutadiene or polyisoprene in copolymerized form and the diene block B is partially or completely hydrogenated or unhydrogenated.

4. A process as claimed in either of claims and 3, wherein the block S of the block copolymer consists of a copolymer of styrene and 1,1-diphenylethylene.

5. A process as claimed in any of claims 1 to 4, wherein the lubricant is used in an amount of from 0.01 to 50% by weight, based on the monomer employed.

6. A process as claimed in any of claims 1 to 5, wherein a branching monomer unit comprising at least two vinylaromatic radicals is used in a molar ratio of vinylaromatic monomers to branching units of from 10,000,000 : 1 to 10 : 1.

7. A process as claimed in any of claims 1 to 6, wherein the catalyst component A) employed is a metallocene complex of the formula (III) 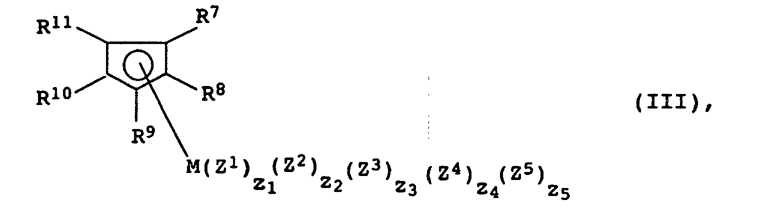 where
R⁷ to R¹¹ are hydrogen, C₁-C₁₀-alkyl, 5- to 7-membered cycloalkyl which in turn can carry C₁-C₆-alkyls as substituents, C₆-C₁₅-aryl or arylalkyl, and where two adjacent radicals may if desired together be cyclic groups of 4 to 15 carbons, or are Si(R¹²)₃,
where R¹² is C₁-C₁₀-alkyl, C₆-C₁₅-aryl or C₃-C₁₀-cycloalkyl,
M is a metal from subgroups III to VI of the Periodic Table of the elements or is a metal of the lanthanide series,
Z¹ to Z⁵ are hydrogen, halogen, C₁-C₁₀-alkyl, C₆-C₁₅-aryl, C₁-C₁₀-alkoxy or C₁-C₁₅-aryloxy
and
z₁ to z₅ are 0, 1, 2, 3, 4 or 5, the sum z₁+z₂+z₃+z₄+z₅ corresponding to the valency M minus 1.

8. A process as claimed in claims 1 to 7, wherein the cation-forming compound B) employed comprises open-chain or cyclic alumoxane compounds of the formula IV or V 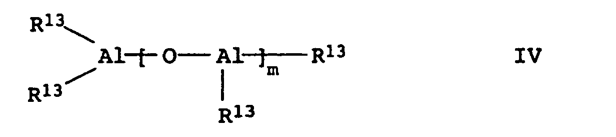 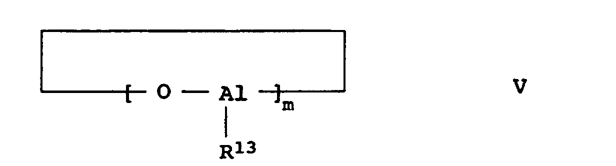 where R¹³ is C₁-C₄-alkyl and m is an integer from 5 to 30.

9. A process as claimed in any of claims 1 to 7, wherein the cation-forming compound B) employed is a coordination complex compound selected from the group consisting of strong, neutral Lewis acids, ionic compounds having Lewis-acid cations and ionic compounds having Brönsted acids as cations.

## Revendications

1. Procédé de préparation de polymères à partir de composés vinylaromatiques en dispersion dans des hydrocarbures aliphatiques en C₄-C₁₀, comme milieu dispersant, en présence d'un agent auxiliaire dispersant et d'un catalyseur, qui peut être obtenu à partir A) d'un complexe de métal de transition des sous-groupes II à VIII, B) d'un agent générateur de cations et C) éventuellement d'un composé d'aluminium, **caractérisé en ce qu'**on ajoute un agent lubrifiant.

2. Procédé suivant la revendication 1, **caractérisé en ce que**, comme agent auxiliaire dispersant, on utilise des copolymères blocs comprenant au moins un bloc de diène B et au moins un bloc S à base d'un copolymère d'un monomère vinylaromatique et de 1,1-diphényléthylène ou de ses dérivés substitués sur les noyaux aromatiques éventuellement par des groupes alkyle comportant jusqu'à 22 atomes de C.

3. Procédé suivant la revendication 2, **caractérisé en ce que** les copolymères blocs contiennent à l'état copolymérisé du polybutadiène ou du polyisoprène et **en ce que** le bloc de diène B est hydrogéné partiellement ou totalement ou n'est pas hydrogéné.

4. Procédé suivant l'une des revendications 2 et 3, **caractérisé en ce que** le bloc S du copolymère bloc est constitué d'un copolymère de styrène et de 1,1-diphényléthylène.

5. Procédé suivant l'une des revendications 1 à 4, **caractérisé en ce qu'**on utilise l'agent lubrifiant en une quantité de 0,01 à 50% en poids, par rapport au monomère mis en oeuvre.

6. Procédé suivant l'une des revendications 1 à 5, **caractérisé en ce qu'**on utilise un élément constitutif monomère ramifiant, qui contient au moins deux radicaux vinylaromatiques, dans un rapport molaire entre les monomères vinylaromatiques et l'élément constitutif ramifiant compris entre 10 000 000/1 et 10/1.

7. Procédé suivant l'une des revendications 1 à 6, **caractérisé en ce que**, comme composant de catalyseur A), on met en oeuvre un complexe de métallocène de la formule générale (III) : 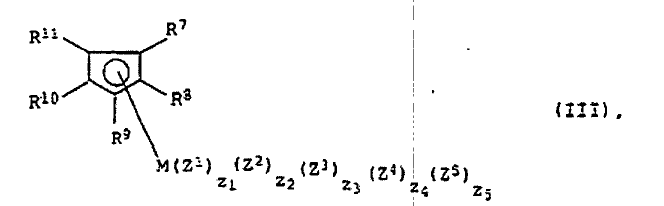 dans laquelle les substituants et indices ont la signification suivante :
R⁷ à R¹¹ représentent de l'hydrogène, de l'alkyle en C₁-C₁₀, du cycloalkyle pentagonal à heptagonal, qui, à son tour, peut porter des groupes alkyle en C₁-C₆ comme substituants, de l'arylalkyle ou de l'aryle en C₆-C₁₅, deux radicaux voisins pouvant éventuellement former également conjointement des groupes cycliques présentant 4 à 15 atomes de C, ou Si(R¹²)₃,
où R¹² représente de l'alkyle en C₁-C₁₀, de l'aryle en C₆-C₁₅ ou du cycloalkyle en C₃-C₁₀,
M est un métal des sous-groupes III à VI du Système Périodique des Eléments ou un métal de la série des lanthanides,
Z¹ à Z⁵ représentent de l'hydrogène, un halogène, de l'alkyle en C₁-C₁₀, de l'aryle en C₆-C₁₅, de l'alcoxy en C₁-C₁₀ ou de l'aryloxy en C₁-C₁₅,
et
z₁ à z₅ représentent 0, 1, 2, 3, 4 ou 5, la somme de z₁+z₂+z₃+z₄+z₅ correspondant à la valence de M déduction faite du nombre 1.

8. Procédé suivant l'une des revendications 1 à 7, **caractérisé en ce que**, comme composé générateur de cations B), on met en oeuvre des composés d'alumoxane à chaîne ouverte ou cycliques répondant à la formule générale IV ou V : 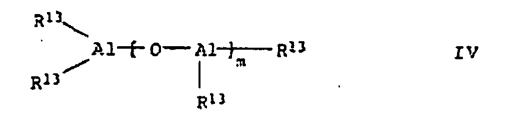 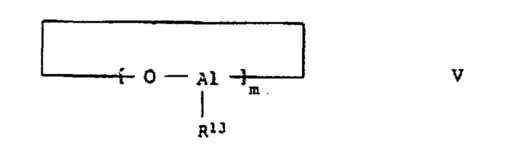 où R¹³ représente un groupe alkyle en C₁-C₄ et m représente un nombre entier de 5 à 30.

9. Procédé suivant l'une des revendications 1 à 7, **caractérisé en ce que**, comme composé générateur de cations B), on utilise un composé complexe de coordination, choisi parmi le groupe des acides de Lewis forts, neutres, des composés ioniques avec des cations d'acides de Lewis et des composés ioniques avec des acides de Brönsted, à titre de cations.
